# EUROPEAN PATENT APPLICATION

(11) **EP 4 564 276 A1**
(43) Date of publication of application: **04.06.2025**
(21) Application number: 22953138.9
(22) Date of filing: 28.07.2022
(51) Int. Cl.: G06Q 50/10

(54) **CARBON MANAGEMENT SYSTEM AND INFORMATION PROCESSING DEVICE**

(71) Applicant: Hitachi, Ltd., Tokyo 100-8280 (JP)
(72) Inventor: FUKUMOTO, Takashi, Tokyo 100-8280 (JP); AKIYAMA, Tomoko, Tokyo 100-8280 (JP); IIZUKA, Hidehiro, Tokyo 100-8280 (JP); MONDEN, Kazuya, Tokyo 100-8280 (JP); MAKINO, Shigeki, Tokyo 100-8280 (JP); NAKATANI, Takeshi, Tokyo 100-8280 (JP); IKEGAYA, Kazuhiro, Tokyo 100-8280 (JP); INAGAKI, Yukihide, Tokyo 100-8280 (JP); INAGAKI, Ryohei, Tokyo 100-8280 (JP); NAKANO, Michiki, Tokyo 100-8280 (JP); SAITO, Motonobu, Tokyo 100-8280 (JP); UCHIYAMA, Hiroki, Tokyo 100-8280 (JP); OYAMATSU, Masayuki, Tokyo 100-8280 (JP)
(74) Representative: Mewburn Ellis LLP
(86) International application number: PCT/JP2022/029166
(87) International publication number: WO 2024/024049

(57) **Abstract**

Provide is a carbon management system or the like which recovers CO₂ from an exhaust gas from a factory group and supplies the CO₂ to a plurality of CO₂ users. A carbon management system (100) includes: a plurality of CO₂ emission facilities (21 to 23) which emit an exhaust gas containing CO₂; a processing facility (11) which separates a CO₂ gas from the exhaust gas emitted from the CO₂ emission facility (21 to 23); a plurality of CO₂ utilization facilities (31 to 33) which use the CO₂ gas separated by the processing facility (11); conduits (5a to 5d) which guide, to the processing facility (11), the exhaust gas emitted from the plurality of CO₂ emission facilities (21 to 23); conduits (5e to 5i) which guide the CO₂ gas separated in the processing facility (11) to the plurality of CO₂ utilization facilities (31 to 33); a storage facility (12) which is connected to the conduits (5a to 5d) or the conduits (5e to 5i) and stores the CO₂ gas; and an information processing device (41) which sets operating conditions of the processing facility (11) and the storage facility (12).

## Description

### Technical Field

The present invention relates to a carbon management system and an information processing device.

### Background Art

In order to realize a carbon neutral society, introduction of a CO₂ reduction technology is in progress. In addition, there is a concept of a CO₂ distribution grid for reusing exhaust gas at an industrial accumulation site in order to reduce a cost burden.

PTL 1 describes, in this concept, that a CO₂ emitter, a CO₂ user, a CO₂ pipe connecting them, and a carbon recycling device are provided, a scheduled amount of CO₂ used for carbon recycling is notified to a constituent business operator of a complex, and CO₂ is supplied from a carbon dioxide supplier on the basis of the scheduled CO₂ usage amount.

### Citation List

### Patent Literature

PTL 1: JP 2022-007936 A

### Summary of Invention

### Technical Problem

In order to realize the concept of the CO₂ distribution grid, it is desirable to adjust the supply and demand balance of CO₂, and perform CO₂ processing and the like appropriately, but such a technology is not described in PTL 1.

In addition, CO₂ is generated as a by-product of the main business of the CO₂ emitter, and the emission amount of the exhaust gas containing CO₂ is not easily changed according to the use of the CO₂ user.

Furthermore, when the exhaust gas from the factory group is received as it is in the operation plan, the fluctuation range of the exhaust gas processing amount becomes large, and thus, it becomes difficult to operate a CO₂ recovery facility (CO₂ processing facility).

In this regard, an object of the present invention is to provide a carbon management system or the like that recovers CO₂ from exhaust gas from a factory group and supplies the CO₂ to a plurality of CO₂ users.

### Solution to Problem

In order to solve the above problems, a carbon management system according to the present invention includes: a plurality of emission facilities which emit an exhaust gas containing CO₂; a processing facility which separates a CO₂ gas from the exhaust gas emitted from the emission facility; a plurality of utilization facilities which use the CO₂ gas separated in the processing facility; a first conduit which guides, to the processing facility, the exhaust gas emitted from the plurality of emission facilities; a second conduit which guides the CO₂ gas separated in the processing facility to the plurality of utilization facilities; a storage facility which is connected to the first conduit or the second conduit and stores the CO₂ gas; and an information processing device which sets operating conditions of the processing facility and the storage facility.

### Advantageous Effects of Invention

According to the present invention, it is possible to provide a carbon management system or the like that recovers CO₂ from an exhaust gas from a factory group and supplies the CO₂ to a plurality of CO₂ users.

### Brief Description of Drawings

[FIG. 1] FIG. 1 is a configuration diagram of a carbon management system according to a first embodiment.
[FIG. 2] FIG. 2 is a functional block diagram illustrating a configuration of an information processing device included in the carbon management system according to the first embodiment.
[FIG. 3] FIG. 3 is a functional block diagram illustrating a configuration of an emission-side information system included in the carbon management system according to the first embodiment.
[FIG. 4] FIG. 4 is a functional block diagram illustrating a configuration of a utilization-side information system included in the carbon management system according to the first embodiment.
[FIG. 5] FIG. 5 is a flowchart illustrating processing executed by the information processing device of the carbon management system according to the first embodiment.
[FIG. 6] FIG. 6 is a flowchart illustrating processing executed by an information processing device of a carbon management system according to a second embodiment.
[FIG. 7] FIG. 7 is a flowchart illustrating processing executed by an information processing device of a carbon management system according to a third embodiment.

### Description of Embodiments

Hereinafter, each embodiment of the present invention will be described with reference to the drawings. Note that the same components are denoted by the same reference numerals, and in a case where descriptions thereof overlap, the description thereof may be omitted. In addition, the present invention is not limited to the following embodiments.

### <<First embodiment>>

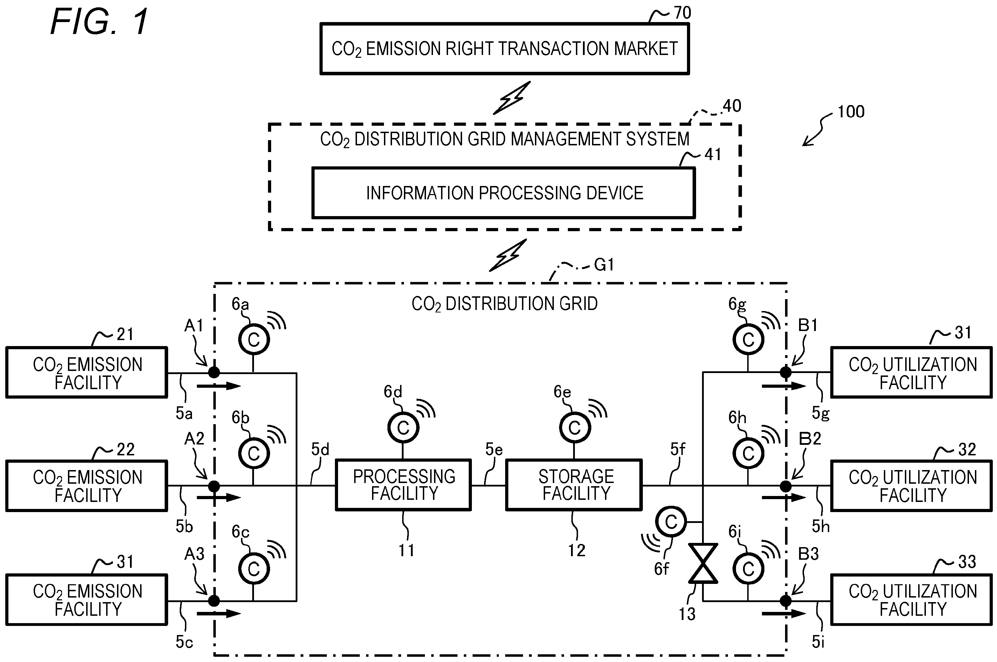

FIG. 1 is a configuration diagram of a carbon management system 100 according to a first embodiment.

The carbon management system 100 is a system that manages distribution of CO₂ (carbon dioxide) supplied from CO₂ emission facilities 21 to 23 (emission facility) to CO₂ utilization facilities 31 to 33 (utilization facility) via a CO₂ distribution grid G1. As illustrated in FIG. 1, the carbon management system 100 includes the CO₂ emission facilities 21 to 23, a processing facility 11, a storage facility 12, a pressure reduction valve 13, the CO₂ utilization facilities 31 to 33, and an information processing device 41. In addition to the configuration described above, the carbon management system 100 includes conduits 5a to 5d as "first conduits" for guiding, to the processing facility 11, the exhaust gas emitted from the CO₂ emission facilities 21 to 23. Further, the carbon management system 100 includes conduits 5e to 5i as "second conduits" for guiding the CO₂ gas separated in the processing facility 11 to the plurality of CO₂ utilization facilities 31 to 33.

The CO₂ emission facilities 21 to 23 illustrated in FIG. 1 are facilities that emit an exhaust gas containing CO₂. Examples of such a CO₂ emission facilities 21 to 23 include a factory and a power plant. The conduits 5a to 5c are connected to the CO₂ emission facilities 21 to 23 in a one-to-one correspondence. Then, the CO₂ gas flowing through the conduits 5a to 5c is merged in the conduit 5d, and the merged CO₂ gas is guided to the processing facility 11 through the conduit 5d.

The processing facility 11 is a facility that separates (recovers) a CO₂ gas from the exhaust gas emitted from the CO₂ emission facilities 21 to 23. As a method for separating a CO₂ gas, for example, there is a chemical absorption method in which an alkaline CO₂ absorbent and an exhaust gas are brought into contact with each other to absorb CO₂ in the exhaust gas into the CO₂ absorbent. In addition, there are a physical adsorption method using an adsorbent using van der Waals force, a chemical adsorption method in which an alkaline CO₂ adsorbent (solid) and an exhaust gas are brought into contact with each other to adsorb CO₂ in the exhaust gas to the CO₂ adsorbent, and the like. Note that a process of concentrating a CO₂ gas is also included in the separation of a CO₂ gas.

The storage facility 12 is a facility that stores a CO₂ gas. As such a storage facility 12, for example, a tank is used. Then, a CO₂ gas is guided from the processing facility 11 to the storage facility 12 via the conduit 5e. The CO₂ gas temporarily stored in the storage facility 12 is supplied to the CO₂ utilization facilities 31 and 32 via the conduits 5f to 5i (second conduits). That is, the storage facility 12 is connected to the "second conduit" described above. More specifically, the CO₂ gas flowing from the storage facility 12 into the conduit 5f is divided into the conduits 5g to 5i, and is further supplied to the CO₂ utilization facilities 31 to 33. Note that the conduits 5g to 5i are connected to the CO₂ utilization facilities 31 to 33 in a one-to-one correspondence.

The CO₂ utilization facilities 31 to 33 are facilities utilizing the CO₂ gas separated by the processing facility 11, and is provided in an industrial accumulation place or the like. Since the CO₂ gas having a certain concentration or higher is used in the CO₂ utilization facilities 31 to 33, basically, the CO₂ gas is supplied to the CO₂ emission facilities 21 to 23 via the processing facility 11. However, when the CO₂ concentration of the emission gas is sufficiently high, the CO₂ utilization facilities 31 to 33 and the CO₂ emission facilities 21 to 23 may be connected without the processing facility 11. In addition, in FIG. 1, three CO₂ emission facilities 21 to 23 and three CO₂ utilization facilities 31 to 33 are illustrated, but the number of CO₂ emission facilities or CO₂ utilization facilities is not limited thereto, and may be one or more.

The CO₂ distribution grid G1 illustrated in FIG. 1 is a pipeline network through which an exhaust gas containing CO₂ and a CO₂ gas flow. Note that portions where the exhaust gas containing CO₂ enters the CO₂ distribution grid G1 are referred to as inflow points A1 to A3. In addition, portions where the CO₂ gas flows out from the CO₂ distribution grid G1 are referred to as outflow points B1 to B3. In the example of FIG. 1, the inflow point A1 exists in the conduit 5a connected to the CO₂ emission facility 21. Similarly, the inflow point A2 exists in the conduit 5b, and the inflow point A3 exists in the conduit 5c. On the other hand, the outflow point B1 exists in the conduit 5g connected to the CO₂ utilization facility 31. Similarly, the outflow point B2 exists in the conduit 5h, and the outflow point B3 exists in the conduit 5i.

Note that in the example of FIG. 1, the conduits 5a, 5b, and 5c on the inflow side and the conduits 5g, 5h, and 5i on the outflow side are included in the CO₂ distribution grid G1, but these conduits may not be included in the CO₂ distribution grid G1.

As illustrated in FIG. 1, the processing facility 11, the storage facility 12, and the pressure reduction valve 13 are included in the CO₂ distribution grid G1. The pressure reduction valve 13 is a valve that adjusts a flow rate of CO₂ gas (or exhaust gas) flowing in the CO₂ distribution grid G1. In the example of FIG. 1, a pressure reduction valve 13 is provided in the conduit 5i (second conduit) connected to the CO₂ utilization facility 33. Note that the flow rate of the CO₂ gas flowing through the conduit 5i decreases as the opening degree of the pressure reduction valve 13 decreases. Therefore, by adjusting the opening degree of the pressure reduction valve 13, the flow rate ratio of CO₂ in the conduits 5 g, 5h, and 5i is also adjusted.

As illustrated in FIG. 1, a measurement/communication device 6a is provided near the inflow point A1 in the conduit 5a. The measurement/communication device 6a measures the flow rate, the pressure, and the CO₂ concentration of the exhaust gas flowing from the CO₂ emission facility 21 to the CO₂ distribution grid G1 via the conduit 5a, and transmits the measurement result to a CO₂ distribution grid management information system 40. Similarly, a measurement/communication device 6b is provided in the conduit 5b, and a measurement/communication device 6c is provided in another conduit 5c. Note that the information processing device 41 of the CO₂ distribution grid management information system 40 may calculate the flow rate, the pressure, and the CO₂ concentration of the exhaust gas on the basis of the application, performance, and operation status of the CO₂ emission facility 21.

As illustrated in FIG. 1, a measurement/communication device 6g is provided near the outflow point B1 of the conduit 5g. The measurement/communication device 6g measures the flow rate, the pressure, and the CO₂ concentration of the CO₂ gas supplied from the CO₂ distribution grid G1 to the CO₂ utilization facility 31, and transmits the measurement result to the CO₂ distribution grid management information system 40. Similarly, a measurement/communication device 6h is provided in the conduit 5h, and a measurement/communication device 6i is provided in another conduit 5i. Note that the information processing device 41 of the CO₂ distribution grid management information system 40 may calculate the flow rate, the pressure, and the CO₂ concentration of the CO₂ gas used in the CO₂ utilization facility 31 on the basis of the application, performance, and operation status of the CO₂ utilization facility 31.

In the example of FIG. 1, a measurement/communication device 6d is provided in the processing facility 11, and a measurement/communication device 6e is also provided in the storage facility 12. Note that instead of the measurement/communication devices 6d and 6e, a measurement/communication device (not illustrated) may be provided in each of the conduits 5d, 5e, and 5f. A measurement/communication device 6f is also provided near the pressure reduction valve 13 in the conduit 5i. The measurement results of these measurement/communication devices 6d, 6e, and 6f are also transmitted to the CO₂ distribution grid management information system 40.

The information processing device 41 illustrated in FIG. 1 is a device that sets operating conditions of the processing facility 11, the storage facility 12, and the pressure reduction valve 13, and is included in the CO₂ distribution grid management information system 40.

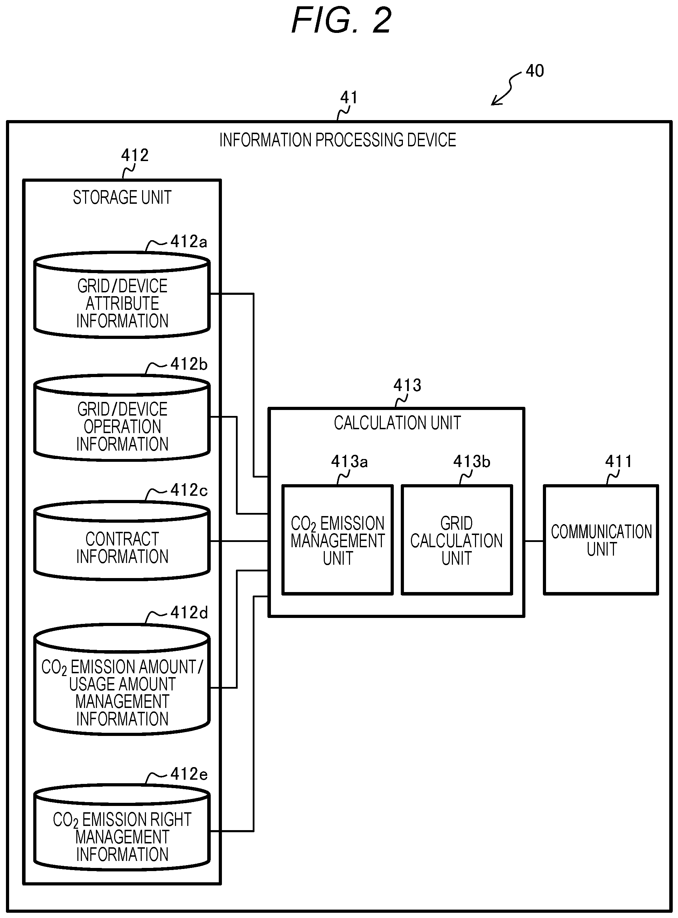

FIG. 2 is a functional block diagram illustrating a configuration of the information processing device 41.

As illustrated in FIG. 2, the information processing device 41 includes a communication unit 411 (information acquisition unit), a storage unit 412, and a calculation unit 413. The communication unit 411 acquires information on the CO₂ emission facilities 21 to 23 (see FIG. 1), the processing facility 11 (see FIG. 1), the CO₂ utilization facilities 31 to 33 (see FIG. 1), and the like. For example, the communication unit 411 acquires the emission amount (flow rate/CO₂ concentration) of the exhaust gas of each of the CO₂ emission facilities 21 to 23. Note that the present embodiment discloses an example in which the information acquisition unit is the communication unit 411, but the information acquisition unit may be an input device that acquires information by input from a user.

The storage unit 412 stores the information acquired by the communication unit 411 (information acquisition unit) . That is, the storage unit 412 stores grid/device attribute information 412a, grid/device operation information 412b, contract information 412c, CO₂ emission amount/usage amount management information 412d, and CO₂ emission right management information 412e. The grid/device attribute information 412a includes not only information indicating design specifications of the CO₂ emission facilities 21 to 23 (see FIG. 1) and the CO₂ utilization facilities 31 to 33 (see FIG. 1) but also information indicating design specifications, applications, and performance of each facility in the CO₂ distribution grid G1 (see FIG. 1). The grid/device operation information 412b is information indicating the operation status of each facility included in the CO₂ distribution grid G1 (see FIG. 1) in addition to the CO₂ emission facilities 21 to 23 (see FIG. 1) and the CO₂ utilization facilities 31 to 33 (see FIG. 1).

The contract information 412c is information indicating a contract content such as a supply amount of CO₂ gas (supply amount per predetermined period) to the CO₂ utilization facilities 31 to 33 (see FIG. 1). The CO₂ emission amount/usage amount management information 412d is information including the amount of the exhaust gas emitted from the CO₂ emission facilities 21 to 23 (see FIG. 1) and the actual value of the amount of CO₂ gas supplied to the CO₂ utilization facilities 31 to 33 (see FIG. 1). The CO₂ emission right management information 412e is information for specifying a CO₂ emission right regarding the release of the CO₂ gas to the atmosphere. The CO₂ emission right is usually purchased from a CO₂ emission right transaction market 70 (see FIG. 1).

The calculation unit 413 illustrated in FIG. 2 sets the operating conditions of the processing facility 11 (see FIG. 1), the storage facility 12 (see FIG. 1), and the pressure reduction valve 13 (see FIG. 1). The calculation unit 413 includes a CO₂ emission management unit 413a and a grid calculation unit 413b. The CO₂ emission management unit 413a calculates the total emission amount of the exhaust gas and the like. The grid calculation unit 413b sets the operating condition of each facility included in the CO₂ distribution grid G1 (see FIG. 1) on the basis of the total emission amount of the exhaust gas and the like. Note that details of the processing of the calculation unit 413 will be described later.

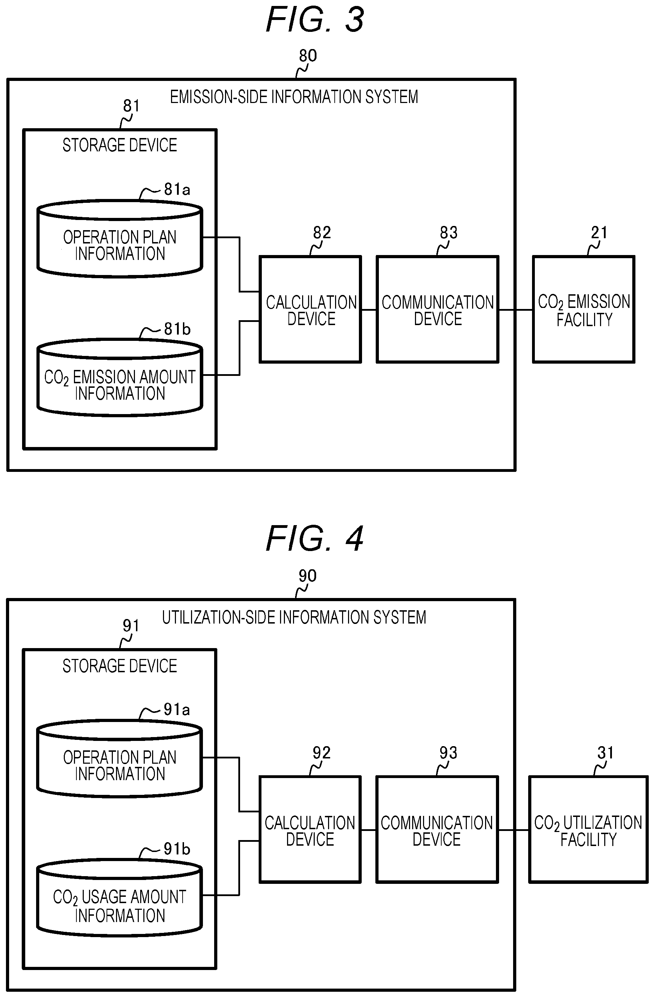

FIG. 3 is a functional block diagram illustrating a configuration of an emission-side information system 80.

The emission-side information system 80 illustrated in FIG. 3 is a system that monitors, controls, and manages the CO₂ emission facility 21, and is connected to the CO₂ emission facility 21 via a communication line and can communicate with the information processing device 41 (see FIG. 1). The emission-side information system 80 includes a storage device 81, a calculation device 82, and a communication device 83.

The storage device 81 stores operation plan information 81a and CO₂ emission amount information 81b. The operation plan information 81a is information indicating the expectation of the future (for example, several hours or several days) operation of the CO₂ emission facility 21. The CO₂ emission amount information 81b is information indicating the expectation of the future CO₂ emission amount of the CO₂ emission facility 21. The calculation device 82 performs processing related to monitoring, control, and management of the CO₂ emission facility 21. The communication device 83 transmits the calculation result of the calculation device 82 to the CO₂ emission facility 21 and the information processing device 41 (not illustrated). Note that each of the other CO₂ emission facilities 22 and 23 (see FIG. 1) is also provided with an emission-side information system (not illustrated).

FIG. 4 is a functional block diagram illustrating a configuration of a utilization-side information system 90.

The utilization-side information system 90 illustrated in FIG. 4 is a system that monitors, controls, and manages the CO₂ utilization facility 31, and is connected to the CO₂ utilization facility 31 via a communication line and can communicate with the information processing device 41 (see FIG. 1). The utilization-side information system 90 includes a storage device 91, a calculation device 92, and a communication device 93.

The storage device 91 stores operation plan information 91a and CO₂ usage amount information 91b. The operation plan information 91a is information indicating the expectation of the future (for example, several hours or several days) operation of the CO₂ utilization facility 31. The CO₂ usage amount information 91b is information indicating an expectation of the future CO₂ usage amount of the CO₂ utilization facility 31. The calculation device 92 performs processing related to monitoring, control, and management of the CO₂ utilization facility 31. The communication device 93 transmits the calculation result of the calculation device 92 to the CO₂ utilization facility 31 and the information processing device 41 (not illustrated). Note that each of the other CO₂ utilization facilities 32 and 33 (see FIG. 1) is also provided with a utilization-side information system (not illustrated).

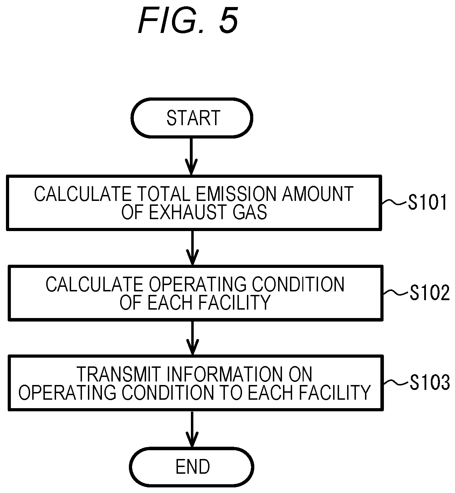

FIG. 5 is a flowchart illustrating processing executed by the information processing device (see also FIG. 2 as appropriate).

In step S101, the information processing device 41 causes the calculation unit 413 to calculate the total emission amount of the exhaust gas. That is, the calculation unit 413 calculates the total emission amount of the exhaust gas of the entire carbon management system 100 on the basis of the amount of the exhaust gas emitted by each of the CO₂ emission facilities 21 to 23 (see FIG. 1) acquired by the communication unit 411 (information acquisition unit). Note that the amount of the exhaust gas emitted by each of the CO₂ emission facilities 21 to 23 (see FIG. 1) is calculated on the basis of the design specifications of the CO₂ emission facilities 21 to 23 and the operation status of the CO₂ emission facilities 21 to 23 acquired by the communication unit 411 (information acquisition unit).

In step S102, the information processing device 41 causes the calculation unit 413 to calculate the operating condition of each facility. That is, the calculation unit 413 calculates the operating conditions of the processing facility 11, the storage facility 12, and the pressure reduction valve 13 on the basis of the total emission amount of the exhaust gas. Specifically, the calculation unit 413 calculates the total emission amount of the exhaust gas delivered from the CO₂ emission facilities 21 to 23 (see FIG. 1) to the processing facility 11 (see FIG. 1) and the average value of the CO₂ concentration, on the basis of the emission amount (flow rate/CO₂ concentration) of the exhaust gas collected via the communication unit 411, and calculates the operating conditions of the processing facility 11, the storage facility 12, and the pressure reduction valve 13 on the basis of these respective values. Here, the operating condition of the processing facility 11 is, for example, a processing amount of the processing facility 11 (the amount of CO₂ contained in the CO₂ gas). The operating condition of the storage facility 12 is, for example, the storage amount increment of the storage facility 12 (a blowing amount of a compressor accompanying the storage facility 12). The operating condition of the pressure reduction valve 13 is, for example, the operation amount (valve opening degree) of the pressure reduction valve 13.

In step S103, the information processing device 41 transmits information on the operating condition to each facility by the communication unit 411. As a result, the delivery amount of the CO₂ gas is controlled, so that the amount of the CO₂ gas supplied to the CO₂ utilization facilities 31 to 33 (see FIG. 1) can be adjusted. Note that the calculation unit 413 may determine the amount of CO₂ gas distributed to the CO₂ utilization facilities 31 to 33 on the basis of the contract information 412c described above, and set the operating conditions of the storage facility 12 and the pressure reduction valve 13 such that the CO₂ gas is supplied according to the amount of CO₂ gas distributed.

Note that, in step S102, the calculation unit 413 may determine the processing amount of the processing facility 11 and the temporary storage amount of the storage facility 12 (see FIG. 1) on the basis of the total emission amount of the exhaust gas and the design value of the processing amount (processing amount per unit time) of the processing facility 11 (see FIG. 1) and the design value of the storage amount of the storage facility 12 which are stored in advance in the storage unit 412. In this case, the calculation unit 413 calculates the operating conditions of the processing facility 11, the storage facility 12, and the pressure reduction valve 13 so as to satisfy the determined processing amount and storage amount.

In addition, for example, the calculation unit 413 may perform the following processing in step S102. That is, the calculation unit 413 may calculate the operating conditions of the processing facility 11, the storage facility 12, and the pressure reduction valve 13 on the basis of the amount of the exhaust gas emitted by the CO₂ emission facilities 21 to 23 (see FIG. 1) and the amount of the CO₂ gas used by the CO₂ utilization facilities 31 to 33 (see FIG. 1). Note that the amount of CO₂ gas used by the CO₂ utilization facilities 31 to 33 is calculated on the basis of the design specification of the CO₂ utilization facilities 31 to 33 and the operation status of the CO₂ utilization facilities 31 to 33 acquired by the communication unit 411 (information acquisition unit).

In addition, for example, the calculation unit 413 may perform the following processing in step S102. That is, the calculation unit 413 may determine the processing amount of the processing facility 11 (see FIG. 1) and the temporary storage amount in the storage facility 12 (see FIG. 1) on the basis of the amount of the exhaust gas emitted by the CO₂ emission facilities 21 to 23 (see FIG. 1), the amount of CO₂ gas used by the CO₂ utilization facilities 31 to 33 (see FIG. 1), and the design value of the processing amount (processing amount per unit time) of the processing facility 11 and the design value of the storage amount of the storage facility 12 which are stored in advance in the storage unit 412. In this case, the calculation unit 413 calculates the operating conditions of the processing facility 11, the storage facility 12, and the pressure reduction valve 13 so as to satisfy the determined processing amount and storage amount.

In addition, for example, the calculation unit 413 may perform the following processing in step S102. That is, the calculation unit 413 calculates the total emission amount of the exhaust gas delivered from all the CO₂ emission facilities 21 to 23 (see FIG. 1) to the processing facility 11 and the average value of the CO₂ concentration on the basis of the emission amount (flow rate and CO₂ concentration) of the exhaust gas collected via the communication unit 411, and calculates the operating condition of the processing facility 11. Then, the calculation unit 413 calculates the operating conditions of the storage facility 12 and the pressure reduction valve 13 on the basis of the total emission amount of the exhaust gas, the average value of the CO₂ concentration, and the amount (flow rate/CO₂ concentration) of the CO₂ gas used by the CO₂ utilization facilities 31 to 33 (see FIG. 1). Also by such a method, the amount of CO₂ gas supplied to the CO₂ utilization facilities 31 to 33 can be appropriately adjusted.

Note that in the processing facility 11 (see FIG. 1), the storage facility 12 (see FIG. 1), and the pressure reduction valve 13 (see FIG. 1), there are an upper limit value and a lower limit value of an operation amount determined from an operation status, in addition to predetermined upper limit values and lower limit values determined from design specifications of these facilities. Therefore, the operating condition calculated by the calculation unit 413 may deviate from a predetermined range of the upper limit value and the lower limit value. For example, in a case where the operating conditions of the processing facility 11, the storage facility 12, and the pressure reduction valve 13 are not executable, the calculation unit 413 calculates the amount of the exhaust gas emitted by the CO₂ emission facilities 21 to 23 (see FIG. 1) or the amount of the CO₂ gas used by the CO₂ utilization facilities 31 to 33 (see FIG. 1) so as to satisfy the executable processing amount of the processing facility 11 and the executable storage amount of the storage facility 12. The calculation result of the calculation unit 413 is transmitted to the emission-side information system 80 (see FIG. 3) or the utilization-side information system 90 (see FIG. 4) via the communication unit 411.

As described above, CO₂ is generated as the by-product of the main business of the CO₂ emitter, so that when the exhaust gas from the factory group is accepted as the operation plan, the fluctuation range of the exhaust gas processing amount becomes large. Therefore, the calculation unit 413 preferably sets the operating conditions of the processing facility 11 and the storage facility 12 so as to stabilize the facility load and the operation load of the processing facility 11.

When receiving the value (changed value) of the emission amount of the exhaust gas from the information processing device 41 (see FIG. 1) via the communication device 83, the emission-side information system 80 (see FIG. 3) determines whether or not to accept the request to change the emission amount on the basis of the operation plan information 81a of the CO₂ emission facility 21. Then, the emission-side information system 80 transmits a response (acceptance or rejection) to the request to change the emission amount to the information processing device 41.

In addition, when receiving the value (changed value) of the usage amount of the CO₂ gas from the information processing device 41 (see FIG. 1) via the communication device 93, the utilization-side information system 90 (see FIG. 4) determines whether or not to accept the request to change the usage amount on the basis of the operation plan information 91a of the CO₂ utilization facility 31. Then, the utilization-side information system 90 transmits a response (acceptance or rejection) to the request to change the usage amount to the information processing device 41.

In addition to the operating conditions of the processing facility 11, the storage facility 12, and the pressure reduction valve 13, the calculation unit 413 of the information processing device 41 determines whether or not the processing of the CO₂ gas is executable on the basis of the emission amount of the CO₂ emission facilities 21 to 23, the usage amount of the CO₂ utilization facilities 31 to 31, and the response (acceptance or rejection) of the CO₂ emission facilities 21 to 23 and the CO₂ utilization facilities 31 to 33.

Note that, depending on the business operator operating the CO₂ emission facilities 21 to 23, there may be a case where it is not desired for a third party to know the information on the emission amount of the exhaust gas. This is because there is a possibility that the operation status and the financial status of the CO₂ emission facilities 21 to 23 are estimated on the basis of the emission amount of the exhaust gas. Note that the same applies to the business operator operating the CO₂ utilization facilities 31 to 33. In such a case, the calculation unit 413 causes the business operator to provide a difference between the amount of CO₂ contained in the exhaust gas of a specific CO₂ emission facility and the usage amount of the CO₂ gas in a specific CO₂ utilization facility.

Here, it is assumed that the business operator of at least one of the specific CO₂ emission facility or the specific CO₂ utilization facility applies not to disclose the emission amount of the exhaust gas (or the CO₂ emission amount) and the CO₂ usage amount to the information processing device 41 in advance from a terminal (not illustrated) of the business operator. While the value of the difference described above is provided to the calculation unit 413, the emission amount of the exhaust gas and the usage amount of the CO₂ gas are not particularly provided. Therefore, it is possible to prevent the operation status and the financial status of each facility from being estimated by a third party.

In such a case, the information processing device 41 acquires, by the communication unit 411 (information acquisition unit), the emission amount of the exhaust gas emitted by CO₂ emission facilities other than the specific CO₂ emission facility among the plurality of CO₂ emission facilities 21 to 23 (see FIG. 1) and the usage amount of the CO₂ gas used by CO₂ utilization facilities other than the specific CO₂ utilization facility among the plurality of CO₂ utilization facilities 31 to 33 (see FIG. 1), and acquires the difference between the amount of CO₂ contained in the exhaust gas of the specific CO₂ emission facility and the amount of the CO₂ gas used by the specific CO₂ utilization facility. Then, the calculation unit 413 calculates the operating conditions of the processing facility 11 (see FIG. 1), the storage facility 12 (see FIG. 1), and the pressure reduction valve 13 (see FIG. 1) on the basis of the emission amount of the exhaust gas emitted by the emission facilities other than the specific emission facility among the plurality of CO₂ emission facilities 21 to 23, the usage amount of the CO₂ gas used by the CO₂ utilization facilities other than the specific CO₂ utilization facility among the plurality of CO₂ utilization facilities 31 to 33, and the above-described difference.

Note that a distribution grid (not illustrated) that supplies at least one of electric power, natural gas (liquefied natural gas or gaseous natural gas), hydrogen, heat, or ammonia to the CO₂ emission facilities 21 to 23 or the CO₂ utilization facilities 31 to 33 may be provided. In such a configuration, the communication unit 411 (information acquisition unit) of the information processing device 41 acquires the information regarding the restriction on the operation of the distribution grid described above. Then, the calculation unit 413 sets the operating conditions of the processing facility 11, the storage facility 12, and the pressure reduction valve 13 on the basis of the restriction of the operation of the distribution grid. The information on the operating condition set by the calculation unit 413 is transmitted to the emission-side information system 80 (see FIG. 3) and the utilization-side information system 90 (see FIG. 4).

According to the first embodiment, the calculation unit 413 sets the operating condition of each facility on the basis of the total emission amount of the exhaust gas and the like. As a result, the exhaust gas emitted from the CO₂ emission facilities 21 to 23 can be appropriately processed by the processing facility 11, and the CO₂ gas can be supplied from the processing facility 11 to the CO₂ utilization facilities 31 to 33. That is, CO₂ can be recovered from the exhaust gas from the factory group and supplied to a plurality of CO₂ users. In addition, according to the first embodiment, the CO₂ distribution grid G1 can be controlled in real time.

### <<Second embodiment>>

In a second embodiment, an embodiment related to an operation plan of the CO₂ distribution grid G1 (see FIG. 1) will be described. Specifically, the second embodiment is different from the first embodiment in that the calculation unit 413 (see FIG. 2) issues a request to change the CO₂ emission amount or the CO₂ usage amount when the CO₂ usage amount is excessive or insufficient. Note that the other configurations (the configuration of the carbon management system 100 and the like: see FIGS. 1 to 4) are the same as those of the first embodiment. In addition, the measurement/communication devices 6a to 6i (see FIG. 1) of the inflow points A1 to A3, the outflow points B1 to B3, the processing facility 11, the storage facility 12, and the pressure reduction valve 13 are not particularly necessary. Hereinafter, portions different from those of the first embodiment will be described, and description of redundant portions will be omitted.

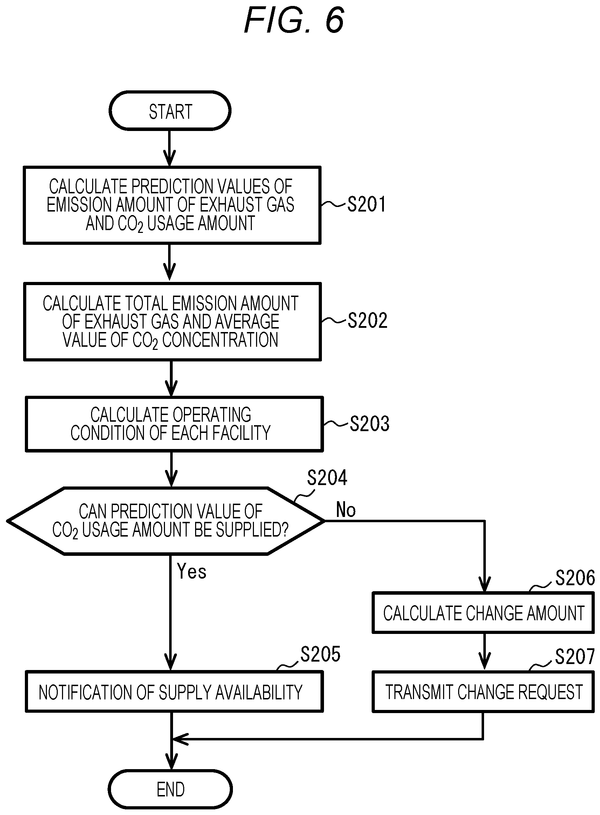

FIG. 6 is a flowchart illustrating processing executed by an information processing device of a carbon management system according to the second embodiment (see also FIG. 2 as appropriate).

In step S201, the information processing device 41 calculates a prediction value of the emission amount of the exhaust gas and calculates a prediction value of the CO₂ usage amount. First, the information processing device 41 acquires the operation plan information 81a of the CO₂ emission facilities 21 to 23 from the emission-side information system 80 (see FIG. 3) via the communication unit 411. Then, the calculation unit 413 calculates the prediction value of the emission amount of the exhaust gas on the basis of the above-described operation plan information 81a in addition to the information on the design specification and performance of the CO₂ emission facilities 21 to 23 included in the grid/device attribute information 412a (see FIG. 2).

Note that the calculation unit 413 may calculate the prediction value of the CO₂ emission amount on the basis of the grid/device operation information 412b (see FIG. 2) and the operation plan information 81a in addition to the actual data of the emission amount of the exhaust gas included in the CO₂ emission amount/usage amount management information 412d (see FIG. 2). That is, the calculation unit 413 may calculate the amount of CO₂ contained in the exhaust gas of the CO₂ emission facilities 21 to 23 on the basis of the application and performance of the CO₂ emission facilities 21 to 23 and the operation status of the CO₂ emission facilities 21 to 23 acquired by the communication unit 411 (information acquisition unit).

In addition, when calculating the prediction value of the CO₂ usage amount in step S201, the information processing device 41 acquires the operation plan information 91a of the CO₂ utilization facility 31 from the utilization-side information system 90 (see FIG. 4) via the communication unit 411. Then, the calculation unit 413 calculates the prediction value of the CO₂ usage amount on the basis of the above-described operation plan information 91a in addition to the information on the design specification and performance of the CO₂ utilization facilities 31 to 33 included in the grid/device attribute information 412a (see FIG. 2).

Note that the calculation unit 413 may calculate the prediction value of the CO₂ usage amount on the basis of the grid/device operation information 412b (see FIG. 2) and the operation plan information 91a in addition to the actual data of the CO₂ gas usage amount included in the CO₂ emission amount/usage amount management information 412d (see FIG. 2).

Next, in step S202, the calculation unit 413 calculates the total emission amount of the exhaust gas and calculates the average value of the CO₂ concentration. That is, the calculation unit 413 calculates the total amount at each time (each future time) of the exhaust gas delivered from the CO₂ emission facilities 21 to 23 to the processing facility 11 and the average value of the CO₂ concentration in the exhaust gas on the basis of the prediction value of the exhaust gas emission amount and the prediction value of the CO₂ gas usage amount.

In step S203, the calculation unit 413 calculates the operating condition of each facility. That is, the calculation unit 413 calculates the operating condition of the processing facility 11 on the basis of the total amount of the exhaust gas and the average value of the CO₂ concentration. In addition, the calculation unit 413 calculates the operating conditions of the storage facility 12 and the pressure reduction valve 13 at each time (each future time) on the basis of the total emission amount of the exhaust gas, the average value of the CO₂ concentration, and the prediction value of the CO₂ gas usage amount in the CO₂ utilization facilities 31 to 33.

Next, in step S204, the calculation unit 413 determines whether or not the prediction value of the CO₂ usage amount can be supplied. That is, the calculation unit 413 determines whether or not the CO₂ usage amount which is a prediction result can be supplied to the CO₂ utilization facilities 31 to 33 (see FIG. 1) on the basis of the total emission amount of the exhaust gas, the average value of the CO₂ concentration in the exhaust gas, the prediction value of the CO₂ usage amount, and the operating condition of each facility. If the prediction value of the CO₂ usage amount can be supplied in step S204 (S204: Yes), the processing of the calculation unit 413 proceeds to step S205.

In step S205, the calculation unit 413 notifies the emission-side information system 80 (see FIG. 3) and the utilization-side information system 90 (see FIG. 4) that the prediction value of the CO₂ usage amount can be supplied.

In addition, if the prediction value of the CO₂ usage amount cannot be supplied in step S204 (S204: No), the processing of the calculation unit 413 proceeds to step S206. In step S206, the calculation unit 413 calculates a change amount of the amount of the exhaust gas emitted by the CO₂ emission facilities 21 to 23 or the amount of the CO₂ gas used by the CO₂ utilization facilities 31 to 33 at each time in the future such that the emission/use of the CO₂ gas is appropriately performed.

Next, in step S207, the calculation unit 413 transmits a change request to the emission-side information system 80 (see FIG. 3) or the utilization-side information system 90 (see FIG. 4). For example, the calculation unit 413 transmits the change amount (increase amount or decrease amount) of the exhaust gas emission amount to the emission-side information system 80 (see FIG. 3) via the communication unit 411. In addition, the calculation unit 413 transmits the change amount (increase amount or decrease amount) of the CO₂ usage amount to the utilization-side information system 90 (see FIG. 4) via the communication unit 411.

For example, when the total amount of CO₂ used by the CO₂ utilization facilities 31 to 33 is smaller than the total amount of CO₂ contained in the exhaust gas of the CO₂ emission facilities 21 to 23, the calculation unit 413 may output a notification requesting a business operator holding the CO₂ emission facilities 21 to 23 to reduce the emission amount of the exhaust gas. In addition, when the sum of the total amount of CO₂ used by the CO₂ utilization facilities 31 to 33 and the amount of CO₂ that can be additionally stored in the storage facility 12 is smaller than the total amount of CO₂ contained in the exhaust gas of the CO₂ emission facilities 21 to 23, the calculation unit 413 may output a notification requesting the business operator holding the CO₂ emission facilities 21 to 23 to reduce the emission amount of the exhaust gas.

In addition, for example, when the total amount of CO₂ used by the CO₂ utilization facilities 31 to 33 is larger than the total amount of CO₂ contained in the exhaust gas of the CO₂ emission facilities 21 to 23, the calculation unit 413 may output a notification requesting the business operator holding the CO₂ utilization facilities 31 to 33 to reduce the CO₂ usage amount. In addition, when the sum of the total amount of CO₂ used by the CO₂ utilization facilities 31 to 33 and the amount that can be additionally released from the storage facility 12 to the conduit 5f (second conduit) is larger than the total amount of CO₂ contained in the exhaust gas of the CO₂ emission facilities 21 to 23, the calculation unit 413 may output a notification requesting the business operator holding the CO₂ utilization facilities 31 to 33 to reduce the CO₂ usage amount.

The emission-side information system 80 (see FIG. 3) receives the amount of change in the emission amount of the emission gas via the communication device 83, and determines whether or not to accept the change request for the CO₂ emission facility 21 on the basis of the operation plan information 81a. Then, the emission-side information system 80 transmits a response (acceptance or rejection) to the request to the information processing device 41 (see FIG. 1) via the communication device 83. In addition, similarly, the utilization-side information system 90 (see FIG. 4) also determines whether or not to accept the change request on the basis of the amount of change in the usage amount of CO₂ gas, and transmits a response to the information processing device 41 (see FIG. 1).

Note that a distribution grid (not illustrated) that supplies at least one of electric power, natural gas (liquefied natural gas or gaseous natural gas), hydrogen, heat, or ammonia to the CO₂ emission facilities 21 to 23 or the CO₂ utilization facilities 31 to 33 may be provided. In such a configuration, the communication unit 411 (information acquisition unit) of the information processing device 41 acquires the information regarding the restriction on the operation of the distribution grid described above. Then, the calculation unit 413 calculates an increase amount or a decrease amount in the amount of the exhaust gas emitted by the CO₂ emission facilities 21 to 23 or an increase amount or a decrease amount in the amount of the CO₂ gas used by the CO₂ utilization facilities 31 to 33 on the basis of the restriction of the operation of the distribution grid. The calculation result of the calculation unit 413 is transmitted to the emission-side information system 80 (see FIG. 3) or the utilization-side information system 90 (see FIG. 4).

According to the second embodiment, it is possible to change the amount of the exhaust gas or CO₂ gas flowing through the CO₂ distribution grid G1 in the CO₂ distribution grid G1 that collects, recovers, and reuses exhaust gas in an industrial accumulation site or the like. In addition, it is possible to change the inflow amount of the exhaust gas into the CO₂ distribution grid G1 and the outflow amount of the CO₂ gas from the CO₂ distribution grid G1.

### <<Third embodiment>>

A third embodiment is different from the second embodiment in that, in a case where the supply and demand of CO₂ is excessive or insufficient, the calculation unit 413 determines release of CO₂ gas to the atmosphere or the like. Note that the other configurations (the configuration of the carbon management system 100 and the like: see FIGS. 1 to 4) are the same as those of the second embodiment. Therefore, portions different from those of the second embodiment will be described, and description of redundant portions will be omitted.

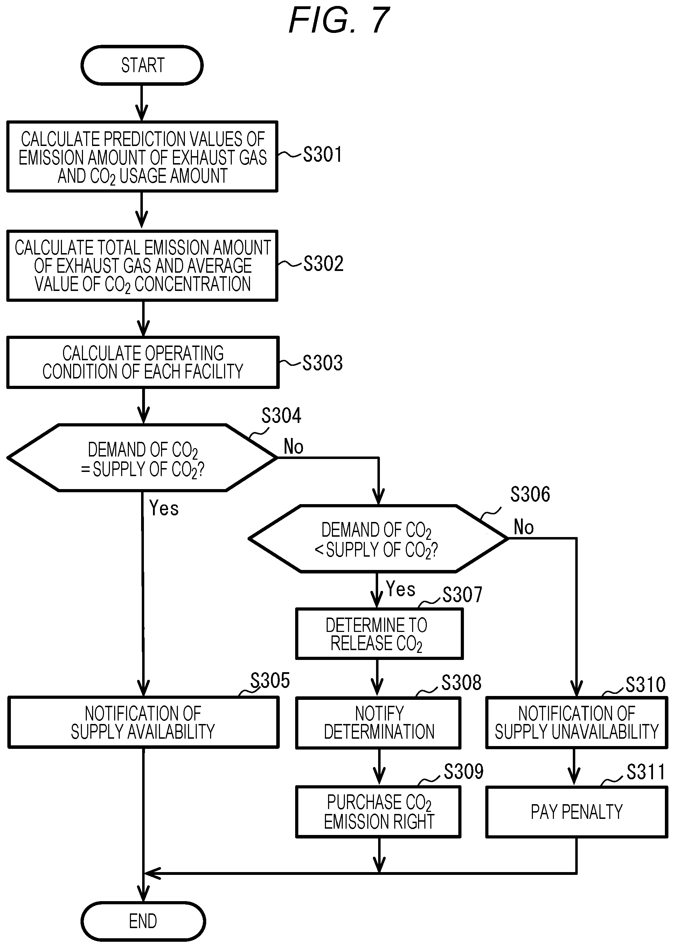

FIG. 7 is a flowchart illustrating processing executed by an information processing device of a carbon management system according to the third embodiment (see also FIG. 2 as appropriate) .

Note that processing in steps S301 to S303 in FIG. 7 is similar to the processing in steps S201 to S203 in the second embodiment (see FIG. 6), and thus description thereof is omitted.

After the operating condition of each facility is calculated in step S303, the processing of the calculation unit 413 proceeds to the processing of step S304. In step S304, the calculation unit 413 determines whether or not the demand and the supply of CO₂ are equal. That is, the calculation unit 413 determines whether or not the total usage amount of CO₂ per unit time is equal to the total supply amount of CO₂ per unit time. If the demand and the supply of CO₂ are equal in step S304 (S304: Yes), the processing of the calculation unit 413 proceeds to step S305.

In step S305, the calculation unit 413 notifies the emission-side information system 80 (see FIG. 3) and the utilization-side information system 90 (see FIG. 4) that a predetermined CO₂ usage amount can be supplied. In addition, if the supply and the demand of CO₂ are not equal in step S304 (S304: No), the processing of the calculation unit 413 proceeds to step S306.

In step S306, the calculation unit 413 determines whether the demand for CO₂ is less than the supply. If the demand for CO₂ is less than the supply in step S306 (S306: Yes), the processing of the calculation unit 413 proceeds to step S307. That is, if the emission amount of the exhaust gas or the CO₂ gas in the CO₂ distribution grid G1 (see FIG. 1) is excessively large, the processing of the calculation unit 413 proceeds to step S307.

In step S307, the calculation unit 413 determines to release CO₂ to the atmosphere. Then, in step S308, the calculation unit 413 notifies the CO₂ emission facilities 21 to 23 of the release amount of the exhaust gas to the atmosphere and the release time zone as the determination of the release of CO₂ to the atmosphere. That is, when the total amount of CO₂ used by the CO₂ utilization facilities 31 to 33 is smaller than the total amount of CO₂ contained in the exhaust gas of the CO₂ emission facilities 21 to 23, the calculation unit 413 sets the operating condition of the processing facility 11 so as to release, to the atmosphere, CO₂ in an amount exceeding the amount of CO₂ used by the CO₂ utilization facilities 31 to 33. Note that when the sum of the total amount of CO₂ used by the CO₂ utilization facilities 31 to 33 and the amount of CO₂ that can be additionally stored in the storage facility 12 is smaller than the total amount of CO₂ contained in the exhaust gas of the CO₂ emission facilities 21 to 23, the calculation unit 413 may set the operating condition of the processing facility 11 so as to release, to the atmosphere, CO₂ in an amount exceeding the amount of CO₂ used in the CO₂ utilization facilities 31 to 33.

In step S309, the calculation unit 413 purchases a CO₂ emission right corresponding to the amount of CO₂ released to the atmosphere from a business operator that holds the CO₂ emission right. Note that the calculation unit 413 may be set to purchase the CO₂ emission right from the CO₂ emission right transaction market 70 (see FIG. 1). The purchase described above is not particularly required to be performed simultaneously with the release of the CO₂ gas to the atmosphere, and may be performed before or after the release.

In addition, if the demand for CO₂ is larger than the supply in step S306 (S306: Yes), the processing of the calculation unit 413 proceeds to step S310. That is, if the amount of the exhaust gas or the CO₂ gas in the CO₂ distribution grid G1 (see FIG. 1) is excessively small, the processing of the calculation unit 413 proceeds to step S310.

In step S310, the calculation unit 413 notifies that the CO₂ gas cannot be supplied. That is, the calculation unit 413 transmits a notification, which indicates that a predetermined amount of CO₂ gas is not supplied to the CO₂ utilization facilities 31 to 33 in a predetermined time zone, to the terminal or the like of the CO₂ user via the communication unit 411.

In step S311, the calculation unit 413 pays a predetermined penalty corresponding to the shortage amount of CO₂ gas to the CO₂ user on the basis of the contract made in advance. That is, when the total amount of CO₂ used by the CO₂ utilization facilities 31 to 33 is larger than the total amount of CO₂ contained in the exhaust gas of the CO₂ emission facilities 21 to 23, the calculation unit 413 performs setting so as to provide money corresponding to the shortage of CO₂ to the business operator holding the CO₂ utilization facilities 31 to 33. Note that, when the total amount of CO₂ used by the CO₂ utilization facilities 31 to 33 is larger than the sum of the total amount of CO₂ contained in the exhaust gas of the CO₂ emission facilities 21 to 23 and the amount of CO₂ that can be additionally released from the storage facility 12 to the conduit 5f (second conduit), the money corresponding to the shortage of CO₂ may be set to be provided to the business operator holding the CO₂ utilization facilities 31 to 33.

According to the third embodiment, in a case where the demand amount of the CO₂ gas is smaller than the supply amount, the calculation unit 413 causes the CO₂ emission facilities 21 to 23 to release the CO₂ gas to the atmosphere. As a result, the supply amount of CO₂ gas can be reduced in accordance with the demand amount of CO₂ gas. In addition, in a case where the demand for CO₂ gas is larger than the supply, the calculation unit 413 pays a predetermined penalty to the business operator of the CO₂ utilization facilities 31 to 33. As a result, it is possible to compensate for the loss of the business operator to which the CO₂ gas is not provided according to a predetermined agreement.

### <<Fourth embodiment>>

A fourth embodiment is different from the first embodiment in that, when excess or insufficiency of CO₂ gas occurs, the calculation unit 413 requests another business operator to participate in the carbon management system 100. Note that the other configurations (the configuration of the carbon management system 100 and the like: see FIGS. 1 to 4) are the same as those of the first embodiment. Therefore, portions different from those of the first embodiment will be described, and description of redundant portions will be omitted.

The calculation unit 413 of the information processing device 41 illustrated in FIG. 2 predicts (assumes) the amount of the exhaust gas emitted by the CO₂ emission facilities 21 to 23 and the amount of the CO₂ gas used by the CO₂ utilization facilities 31 to 33 at a certain point of time in the future. Then, the calculation unit 413 calculates a surplus amount or a shortage amount when the CO₂ gas flows through the CO₂ distribution grid G1, on the basis of the processing capacity of the exhaust gas of the processing facility 11 (see FIG. 1). Note that in predicting the exhaust gas emission amount and the CO₂ gas usage amount, the calculation unit 413 may use the contract information 412c (see FIG. 2) with the CO₂ emitter, or may use the actual data included in the grid/device operation information 412b (see FIG. 2). In addition, the calculation unit 413 may acquire the operation plan information 81a of the CO₂ emission facilities 21 to 23 from the emission-side information system 80 (see FIG. 3), and calculate the emission amount and the like of the exhaust gas on the basis of the operation plan information 81a.

For example, in a case where the CO₂ gas is insufficient, the calculation unit 413 requests another business operator who owns the CO₂ emission facility (a business operator who does not currently participate in the carbon management system 100) to participate in the CO₂ distribution grid G1. In addition, in a case where a surplus of CO₂ gas occurs, the calculation unit 413 requests another business operator who owns the CO₂ utilization facility to participate in the carbon management system 100. In addition, in a case where the processing capacity of the processing facility 11 is insufficient with respect to the emission amount of the exhaust gas, the calculation unit 413 determines that it is necessary to enhance the processing capacity of the processing facility 11.

In this manner, the calculation unit 413 calculates a shortage or a surplus of CO₂ at a certain point of time in the future, on the basis of the prediction value of the CO₂ emission amount at the certain point of time of the CO₂ emission facilities 21 to 23 and the prediction value of the CO₂ usage amount at the certain point of time of the CO₂ utilization facilities 31 to 33. Then, in a case where a shortage of CO₂ occurs, the calculation unit 413 issues a command to output a request to participate in the carbon management system 100 (see FIG. 1) to the CO₂ emitting business operator, and in a case where a surplus of CO₂ occurs, the calculation unit issues a command to output a request to participate in the carbon management system 100 to the CO₂ user.

Note that in a case where the excess or insufficiency of the CO₂ gas does not occur, the calculation unit 413 may request each of the business operator owning the CO₂ emission facility and the business operator owning the CO₂ utilization facility to participate in the carbon management system 100.

According to the fourth embodiment, in a case where the excess or insufficiency of the CO₂ gas supplied to the CO₂ utilization facilities 31 to 33 occurs, the calculation unit 413 requests another business operator to participate in the carbon management system 100. When another business operator joins the carbon management system 100 in response to such a participation request, the excess or insufficiency of CO₂ in the carbon management system 100 can be reduced.

### <<Fifth embodiment>>

A fifth embodiment is different from the first embodiment in that a decarbonization amount is allocated to a business operator participating in a carbon management system 100. Note that the other configurations (the configuration of the carbon management system 100 and the like: see FIGS. 1 to 4) are the same as those of the first embodiment. Therefore, portions different from those of the first embodiment will be described, and description of redundant portions will be omitted.

The calculation unit 413 of the information processing device 41 illustrated in FIG. 2 acquires information on the emission amount (flow rate/CO₂ concentration) of exhaust gas from the measurement/communication devices 6a to 6c provided at the inflow points A1 to A3 of the CO₂ distribution grid G1 (see FIG. 1) and the emission-side information system 80. The information on the emission amount of the exhaust gas is stored as the CO₂ emission amount/usage amount management information 412d (see FIG. 2) in association with the identification information of the CO₂ emission facilities 21 to 23 as emission sources.

In addition, the calculation unit 413 acquires information on the usage amount of CO₂ gas (flow rate/CO₂ concentration) from the measurement/communication devices 6 g to 6i or the utilization-side information system 90 (see FIG. 4) provided at the outflow points B1 to B3 of the CO₂ distribution grid G1 (see FIG. 1). Note that the information on the usage amount of CO₂ gas is stored as the CO₂ emission amount/usage amount management information 412d (see FIG. 2) in association with the identification information of the CO₂ gas utilization facilities 31 to 33. That is, the storage unit 412 (see FIG. 2) of the information processing device 41 stores each of the emission amount and the CO₂ concentration of the exhaust gas of the CO₂ emission facilities 21 to 23 and the Co₂ usage amount and concentration of the CO₂ gas used by the CO₂ utilization facilities 31 to 33 in association with the owner information of each facility.

Then, the calculation unit 413 acquires the release amount (flow rate/CO₂ concentration) of CO₂ from the CO₂ emission facilities 21 to 23, the processing facility 11, or the like of the CO₂ distribution grid G1 (see FIG. 1) to the atmosphere, and stores the release amount as the CO₂ emission amount/usage amount management information 412d (see FIG. 2) .

In addition, the calculation unit 413 stores information on the CO₂ emission right purchased from the CO₂ emission right transaction market 70 (see FIG. 1) as the CO₂ emission right management information 412e. That is, the storage unit 412 (see FIG. 2) of the information processing device 41 stores the atmospheric release amount of CO₂ and the information on the CO₂ emission right to be purchased in association with each other.

On the basis of the CO₂ emission amount/usage amount management information 412d (see FIG. 2) and the CO₂ emission right management information 412e (see FIG. 2), the calculation unit 413 allocates a decarbonization amount (for example, a reduction amount of CO₂) to the business operator participating in the CO₂ distribution grid G1 according to the agreement of the public system related to decarbonization. That is, the calculation unit 413 allocates the decarbonization amount to the business operator participating in the carbon management system 100 according to a predetermined agreement. Note that the decarbonization amount may be allocated to the business operator participating in the CO₂ distribution grid G1 according to a predetermined agreement included in the contract information 412c (see FIG. 2). For example, in the CO₂ emission facilities 21 to 23, the calculation unit 413 allocates a larger decarbonization amount as the amount of CO₂ emitted per unit time (the amount of CO₂ contained in the exhaust gas) is larger.

According to the fifth embodiment, the calculation unit 413 can contribute to suppression of global warming by allocating a decarbonization amount to a business operator participating in the carbon management system 100.

### <<Modification>>

Although the carbon management system 100 and the like according to the present invention have been described in each embodiment, the present invention is not limited to these descriptions, and various modifications can be made.

For example, in each embodiment, the configuration in which the carbon management system 100 (see FIG. 1) includes the storage facility 12 and the pressure reduction valve 13 has been described, but the present invention is not limited thereto. That is, at least one of the storage facility 12 or the pressure reduction valve 13 may be omitted.

In addition, in each embodiment, a case where the pressure reduction valve 13 is provided in the conduit 5i (second conduit) has been described, but the number and installation location of the pressure reduction valves 13 can be appropriately changed. For example, the pressure reduction valve may be provided in another conduit 5g (second conduit) or the conduit 5h (second conduit). In addition, the pressure reduction valve may be provided in at least one of the conduits 5a to 5c (first conduits) connected to the CO₂ emission facilities 21 to 23.

In addition, in each embodiment, the configuration in which the storage facility 12 is connected to the conduits 5e and 5f (second conduits) on the downstream side of the processing facility 11 (see FIG. 1), but the present invention is not limited to this configuration. For example, the storage facility 12 may be provided in the conduit 5d (first conduit) on the upstream side of the processing facility 11.

In addition, each embodiment can be appropriately combined. For example, the second embodiment (see FIG. 6) and the third embodiment (see FIG. 7) may be combined, and the calculation unit 413 may perform the following processing. That is, in a case where the demand amount of CO₂ is smaller than the supply amount of CO₂, when a change request to reduce the emission amount of the exhaust gas is issued to the business operator of the CO₂ emission facilities 21 to 23, but the change request is not accepted, the calculation unit 413 may determine the released of CO₂ to the atmosphere. In addition, in a case where the demand amount of CO₂ is larger than the supply amount of CO₂, when a change request to reduce the usage amount of CO₂ gas is issued to the business operator of the CO₂ utilization facilities 31 to 33, but the change request is not accepted, the calculation unit 413 may determine payment of the penalty to the business operator.

In addition, in the embodiment, a case where CO₂ (carbon-containing component) extracted from the exhaust gas is supplied to the CO₂ utilization facilities 31 to 33 has been described, but the present invention is not limited thereto. For example, each embodiment can also be applied to the distribution of carbon-containing components such as CO and CH₄ contained in the exhaust gas. As a method for measuring the carbon-containing component in the exhaust gas, mass spectrometry, gas chromatography, infrared spectroscopy, cavity ring down spectroscopy, or the like is used.

In addition, all or a part of programs for implementing the functions (carbon management methods) of the carbon management system 100 and the like described in each embodiment may be executed by one or more computers such as a server (not illustrated). All or a part of the programs may be realized in hardware, for example, by designing the programs as an integrated circuit. In addition, each of the configurations and functions described in the embodiments may be realized by software by a processor interpreting and executing a program for realizing each function. Information such as a program, a table, and a file for realizing each function may be stored in a recording device such as a solid state drive (SSD) or a recording medium such as an IC card, an SD card, a CD-ROM, and a DVD in addition to a memory and a hard disk. The program described above can also be provided via a communication line.

In addition, each embodiment has been described in detail for easy understanding of the present invention, and is not necessarily limited to those having all the described configurations. In addition, it is possible to add, delete, and replace other configurations for a part of the configuration of the embodiment. In addition, the above-described mechanisms and configurations are described in consideration of necessity for the description, and all the mechanisms and configurations in the product are not necessarily described.

### Reference Signs List

11 processing facility
12 storage facility
13 pressure reduction valve
21, 22, 23 CO₂ emission facility (emission facility)
31, 32, 33 CO₂ utilization facility (utilization facility)
40 CO₂ distribution grid management information system
41 information processing device
411 communication unit (information acquisition unit)
412 storage unit
412a grid/device attribute information
412b grid/device operation information
412c contract information
412d CO₂ emission amount/usage amount management information
412e CO₂ emission right management information
413 calculation unit
5a, 5b, 5c, 5d conduit (first conduit)
5e, 5f, 5g, 5h, 5i conduit (second conduit)
6a, 6b, 6c, 6d, 6e, 6f, 6g, 6h, 6i measurement/communication device
70 CO₂ emission right transaction market
100 carbon management system
G1 CO₂ distribution grid

## Claims

1. A carbon management system comprising:
a plurality of emission facilities which emit an exhaust gas containing CO₂;
a processing facility which separates a CO₂ gas from the exhaust gas emitted from the emission facility;
a plurality of utilization facilities which use the CO₂ gas separated in the processing facility;
a first conduit which guides, to the processing facility, the exhaust gas emitted from the plurality of emission facilities;
a second conduit which guides the CO₂ gas separated in the processing facility to the plurality of utilization facilities;
a storage facility which is connected to the first conduit or the second conduit and stores the CO₂ gas; and
an information processing device which sets operating conditions of the processing facility and the storage facility.

2. The carbon management system according to claim 1, further comprising a pressure reduction valve provided in the first conduit or the second conduit.

3. An information processing device used in a carbon management system including
a plurality of emission facilities which emit an exhaust gas containing CO₂,
a processing facility which separates a CO₂ gas from the exhaust gas emitted from the emission facility,
a plurality of utilization facilities which use the CO₂ gas separated in the processing facility,
a first conduit which guides, to the processing facility, the exhaust gas emitted from the plurality of emission facilities,
a second conduit which guides the CO₂ gas separated in the processing facility to the plurality of utilization facilities,
a pressure reduction valve which is provided in the first conduit or the second conduit, and
a storage facility which is connected to the second conduit and stores the CO₂ gas,
the information processing device comprising:
an information acquisition unit which acquires information of the emission facility, the processing facility, and the utilization facility;
a storage unit which stores the information acquired by the information acquisition unit; and
a calculation unit which calculates a total amount of the exhaust gas emitted in the entire carbon management system on a basis of an amount of the exhaust gas emitted by each of the emission facilities acquired by the information acquisition unit, and calculates operating conditions of the processing facility, the storage facility, and the pressure reduction valve on a basis of the total emission amount.

4. The information processing device according to claim 3, wherein the calculation unit determines a processing amount of the processing facility and a storage amount of the storage facility on a basis of the total emission amount and a design value of the processing amount of the processing facility and a design value of the storage amount of the storage facility stored in advance in the storage unit, and calculates operating conditions of the processing facility, the storage facility, and the pressure reduction valve so as to satisfy the determined processing amount and storage amount.

5. The information processing device according to claim 3, wherein the calculation unit calculates operating conditions of the processing facility, the storage facility, and the pressure reduction valve on a basis of the amount of the exhaust gas emitted by the emission facility and an amount of the CO₂ gas used by the utilization facility which are acquired by the information acquisition unit.

6. The information processing device according to claim 5, wherein the calculation unit determines a processing amount of the processing facility and a temporary storage amount in the storage facility on a basis of the amount of the exhaust gas emitted by the emission facility, an amount of the CO₂ gas used by the utilization facility, and a design value of a processing amount of the processing facility and a design value of a storage amount of the storage facility which are stored in advance in the storage unit, and calculates operating conditions of the processing facility, the storage facility, and the pressure reduction valve so as to satisfy the determined processing amount and determined storage amount.

7. The information processing device according to claim 3, wherein
the storage unit stores a design specification of the emission facility, and
the calculation unit calculates the amount of the exhaust gas emitted by the emission facility on a basis of the design specification of the emission facility and an operation status of the emission facility acquired by the information acquisition unit.

8. The information processing device according to claim 5, wherein
the storage unit stores a design specification of the emission facility and a design specification of the utilization facility, and
the calculation unit calculates the amount of the exhaust gas emitted by the emission facility on a basis of the design specification of the emission facility and an operation status of the emission facility acquired by the information acquisition unit, and
calculates the amount of the CO₂ gas used by the utilization facility on a basis of the design specification of the utilization facility and an operation status of the utilization facility acquired by the information acquisition unit.

9. The information processing device according to claim 3, wherein in a case where the operating conditions of the processing facility, the storage facility, and the pressure reduction valve are not executable, the calculation unit calculates the amount of the exhaust gas emitted by the emission facility or the amount of the CO₂ gas used by the utilization facility so as to satisfy an executable processing amount of the processing facility and an executable storage amount of the storage facility.

10. The information processing device according to claim 5, wherein
the information acquisition unit acquires an emission amount of an exhaust gas emitted by emission facilities other than a specific emission facility among the plurality of emission facilities, and a usage amount of a CO₂ gas used by utilization facilities other than a specific utilization facility among the plurality of utilization facilities, and acquires a difference between an amount of CO₂ contained in the exhaust gas of the specific emission facility and a usage amount of the CO₂ gas of the specific utilization facility, and
the calculation unit calculates the operating conditions of the processing facility, the storage facility, and the pressure reduction valve on a basis of the emission amount of the exhaust gas emitted by the emission facilities other than the specific emission facility among the plurality of emission facilities, the usage amount of the CO₂ gas used by the utilization facilities other than the specific utilization facility among the plurality of utilization facilities, and the difference.

11. The information processing device according to claim 5, wherein the calculation unit sets the operating condition of the processing facility so as to release, to an atmosphere, CO₂ in an amount exceeding the amount of the CO₂ used by the utilization facility when a total amount of the CO₂ used by the utilization facility is smaller than a total amount of CO₂ contained in the exhaust gas of the emission facility or when a sum of a total amount of the CO₂ used by the utilization facility and an amount of CO₂ which is allowed to be additionally stored in the storage facility is smaller than the total amount of the CO₂ contained in the exhaust gas of the emission facility.

12. The information processing device according to claim 11, wherein the calculation unit is set to purchase a CO₂ emission right corresponding to the amount of CO₂ released to the atmosphere from a business operator holding the CO₂ emission right or from a CO₂ emission right transaction market.

13. The information processing device according to claim 5, wherein the calculation unit performs setting so as to provide money corresponding to a shortage of CO₂ to a business operator who holds the utilization facility when a total amount of the CO₂ used by the utilization facility is larger than a total amount of the CO₂ contained in the exhaust gas of the emission facility or when the total amount of the CO₂ used by the utilization facility is larger than a sum of the total amount of the CO₂ contained in the exhaust gas of the emission facility and an amount of CO₂ which is allowed to be additionally released from the storage facility to the second conduit.

14. The information processing device according to claim 5, wherein the calculation unit outputs a notification requesting a business operator holding the emission facility to reduce the emission amount of the exhaust gas when a total amount of the CO₂ used in the utilization facility is smaller than a total amount of the CO₂ contained in the exhaust gas of the emission facility, or when a sum of the total amount of the CO₂ used in the utilization facility and an amount of CO₂ which is allowed to be additionally stored in the storage facility is smaller than the total amount of the CO₂ contained in the exhaust gas of the emission facility.

15. The information processing device according to claim 5, wherein the calculation unit outputs a notification requesting a business operator holding the utilization facility to reduce the CO₂ usage amount when a total amount of the CO₂ used by the utilization facility is larger than a total amount of the CO₂ contained in the exhaust gas of the emission facility, or when a sum of the total amount of the CO₂ used by the utilization facility and an amount of CO₂ which is allowed to be additionally released from the storage facility into the second conduit is larger than the total amount of the CO₂ contained in the exhaust gas of the emission facility.

16. The information processing device according to claim 5, wherein the calculation unit calculates a shortage or surplus of CO₂ at a certain point of time in future on a basis of a prediction value of a CO₂ emission amount of the emission facility at the certain point of time and a prediction value of a CO₂ usage amount of the utilization facility at the point of time, and the calculation unit issues, to a CO₂ emitting business operator, a command to output a request to participate in the carbon management system when the shortage of CO₂ occurs, and issues, to the CO₂ user, a command to output a request to participate in the carbon management system when the surplus of CO₂ occurs.

17. The information processing device according to claim 5, wherein
the storage unit stores each of an emission amount and a CO₂ concentration of the exhaust gas of the emission facility and a Co₂ usage amount and a concentration of a CO₂ gas used by the utilization facility in association with owner information of each facility, and stores an atmospheric release amount of CO₂ and information on a CO₂ emission right to be purchased in association with each other, and
the calculation unit allocates a decarbonization amount to a business operator participating in the carbon management system according to a predetermined agreement.

18. The information processing device according to claim 3, wherein
the storage unit stores application and performance of the emission facility, and
the calculation unit calculates an amount of CO₂ contained in the exhaust gas of the emission facility by using the application and performance of the emission facility and an operation status of the emission facility acquired by the information acquisition unit.

19. The information processing device according to claim 3, wherein
a distribution grid which supplies at least one of electric power, natural gas, hydrogen, heat, or ammonia to the emission facility or the utilization facility is provided,
the information acquisition unit acquires information regarding restrictions on an operation of the distribution grid, and
the calculation unit sets operating conditions of the processing facility, the storage facility, and the pressure reduction valve on a basis of the restrictions of the operation of the distribution grid.

20. The information processing device according to claim 9, wherein
a distribution grid which supplies at least one of electric power, natural gas, hydrogen, heat, or ammonia to the emission facility or the utilization facility is provided,
the information acquisition unit acquires information regarding restrictions on an operation of the distribution grid, and
the calculation unit calculates an increase amount or a decrease amount of the amount of the exhaust gas emitted by the emission facility or an increase amount or a decrease amount of the amount of the CO₂ gas used by the utilization facility on a basis of the restrictions on the operation of the distribution grid.
